# FASCICULE DE BREVET EUROPEEN

(11) **EP 1 506 086 B1**
(45) Date de publication et mention de la délivrance du brevet: **09.11.2005**
(21) Numéro de dépôt: 03722439.1
(22) Date de dépôt: 10.04.2003
(51) Int. Cl.: B29D 30/30

(54) **DISPOSITIF DE STOCKAGE ET DE TRANSFERT DE PRODUITS EN BANDE EN VUE DE LEUR UTILISATION POUR LA FABRICATION D'UNE ENVELOPPE DE PNEUMATIQUE**
SPEICHER- UND TRANSFER-VORRICHTUNG VON BANDFÖRMIGEN PRODUKTEN ZUR VERWENDUNG IN DER REIFENHERSTELLUNG
DEVICE FOR STORING AND TRANSFERRING STRIP-TYPE PRODUCTS FOR USE IN MAKING A TYRE CASING

(30) Priorité: 25.04.2002 FR 0205241
(43) Date de publication de la demande: 16.02.2005
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: BARDAJI ZURIARRAIN, Fidel, Aitor, E-47014 Valladolid (ES); SAEZ DE IBARRA ORTIZ DE LANDALUCE, Tomas, E-01012 Vitoria (ES)
(74) Mandataire: Bauvir, Jacques
(86) Numéro de dépôt international: PCT/EP2003/003725
(87) Numéro de publication internationale: WO 2003/091009

(56) Documents cités:
- US-A- 3 071 179
- US-A- 3 591 439
- US-A- 3 654 828
- US-A- 4 296 514
- US-A- 4 659 417
- US-A- 4 877 468

## Description

L'invention concerne un procédé pour la manutention de produits en bande en vue de leur utilisation pour la fabrication d'une enveloppe de pneumatique.

Pour la fabrication d'une telle enveloppe, on utilise un certain nombre de produits différents, initialement stockés sous la forme de bandes continues enroulées sur des bobines de stockage disposées dans des postes d'alimentation. Ces bandes sont déroulées puis coupées en tronçons d'une longueur prédéterminée. Les différents tronçons sont alors déposés successivement par enroulement autour d'un tambour de confection.

De plus, certains couples de produits présentent, une fois posés sur le tambour de confection, une symétrie par rapport à un plan perpendiculaire à l'axe de rotation du tambour et passant par le milieu du tambour. Si l'on désire obtenir les deux tronçons depuis une bande unique issue d'un seul poste d'alimentation, il est nécessaire, avant la dépose d'un des deux tronçon de produits sur le tambour, de faire pivoter ce tronçon de 180° autour d'un axe perpendiculaire au plan de ce même tronçon de produit posé à plat, pour obtenir un tronçon présentant une symétrie par rapport au tronçon n'ayant pas subi ce pivotement. Après leur dépose, successivement sur les cotés droit et gauche du tambour de confection, les deux tronçons de produit présentent alors la symétrie recherchée.

Les produits dont il est question ci-dessus peuvent être des profilés caoutchouteux, des bandes caoutchouteuses ou encore des nappes formées d'un mélange caoutchouteux dans lequel sont noyés des fils textiles ou métalliques, disposés parallèlement entre eux et faisant un angle déterminé avec la direction longitudinale de la nappe, ces nappes étant appelées par exemple "nappes de renfort carcasse" ou "nappes de ceinture" selon leur positionnement dans le pneumatique.

Compte tenu notamment du grand nombre de produits différents à poser, de la masse et de l'encombrement des tronçons de nappes, pour la fabrication de pneumatiques de grandes dimensions tels que ceux destinés aux engins de génie civil ou aux véhicules agricoles, la plupart des opérations consistant à dérouler les bandes continues depuis leurs postes d'alimentations respectifs, à les découper pour former des tronçons, à les retourner, et à transférer lesdits tronçons vers le tambour de confection, restent à ce jour manuelles et présentent une pénibilité certaine.

Pour automatiser ces opérations et en améliorer l'ergonomie, de nombreuses solutions technologiques peuvent être mises en oeuvre.

Ainsi on peut envisager de faire coopérer un tambour de pose, mobile dans la direction transversale au sens de déroulage des produits, et venant se positionner à la demande dans l'axe de serveurs, généralement fixes, comprenant chacun un système de déroulage de bande, avec un système de coupe et un système de transfert. Ces principes sont dévoilés par exemple dans le document US 3 654 828.

Toutefois cette solution a pour conséquence de multiplier le nombre de systèmes de coupe et de transfert en augmentant substantiellement le coût d'une telle installation.

Une autre voie, particulièrement intéressante, consiste à installer un ou plusieurs ensembles mobiles assurant la coupe puis le transfert des tronçons de bande depuis les postes de déroulage fixes de chacun des produits vers un tambour de pose fixe. Une description de ce type de dispositif se retrouve à titre d'exemple dans le document US 4 504 337.

En raison de la longueur importante des tronçons à manipuler, ces ensembles de transfert mettent généralement en oeuvre des cylindres de stockage autour desquels le tronçon à transférer est enroulé avant d'être déposé sur le tambour de pose. Des cylindres de ce type, fixes ou mobiles sont dévoilés dans les documents DE 27 40 609, US 3 591 439 ou encore US 3 654 828. Le maintien du produit enroulé autour de la surface externe du cylindre est opéré soit par un dispositif pneumatique créant une dépression entre la semelle du produit et la surface du cylindre, soit par un ensemble de dispositifs électromagnétiques lorsque les produits contiennent des éléments métalliques.

Un autre exemple de cylindre de stockage de ce type est décrit dans le document US 4659417.

Toutefois ces systèmes sont mal adaptés pour manutentionner des tronçons de plusieurs mètres et pesant plusieurs dizaines de kilos, comme cela est souvent le cas pour la réalisation de pneumatiques destinés aux engins de génie civil ou agraire. De plus les produits, dont la position finale sur le tambour présente un caractère symétrique, sont déroulés depuis deux postes d'alimentation distincts, ce qui tend à augmenter le nombre de postes ainsi que la taille de l'installation.

L'invention vise précisément à apporter une solution d'une grande souplesse d'exploitation pour réaliser la manutention de tronçons de bande présentant une masse et une longueur importante.

A cet effet, l'invention concerne un dispositif de stockage et de transfert particulièrement apte à stocker des tronçons de produits de masse élevée, comprenant un cylindre de stockage monté à rotation autour d'un axe de révolution horizontal sur un châssis, lui même monté sur un support, ledit châssis étant monté à rotation sur le support, autour d'un deuxième axe vertical et perpendiculaire à l'axe de révolution du cylindre de stockage, permettant alors, en pivotant de 180°, d'effectuer le retournement du tronçon de bande avant de le déposer sur le tambour de confection.

La présente description a pour objet de détailler à titre non limitatif un dispositif de transfert et de stockage ainsi qu'une installation comportant un tel dispositif conforme à l'invention et de proposer les variantes de réalisation permettant d'en adapter l'usage à des produits ou à des configuration d'installations diverses, description faite en référence aux dessins annexés dans lesquels :
- la figure 1 est une vue en plan de dessus d'une installation comportant un dispositif conforme à l'invention ;
- la figure 2 est une vue de côté en élévation de l'installation de la figure 1, suivant une direction matérialisée sur la figure 1 par la flèche V ; l'installation est ici représentée à vide, c'est-à-dire en l'absence de produit à poser ;
- les figures 3 et 4 sont des vues schématiques en perspective d'un aiguillage ;
- la figure 5 représente une vue schématique d'un tronçon de bande avant et après son retournement ;
- les figures 6 à 11, sont des vues analogues à la figure 2, qui représentent l'installation en cours de fonctionnement et illustrent les étapes successives d'un procédé de fabrication de pneumatiques mettant en oeuvre un dispositif conforme à l'invention.

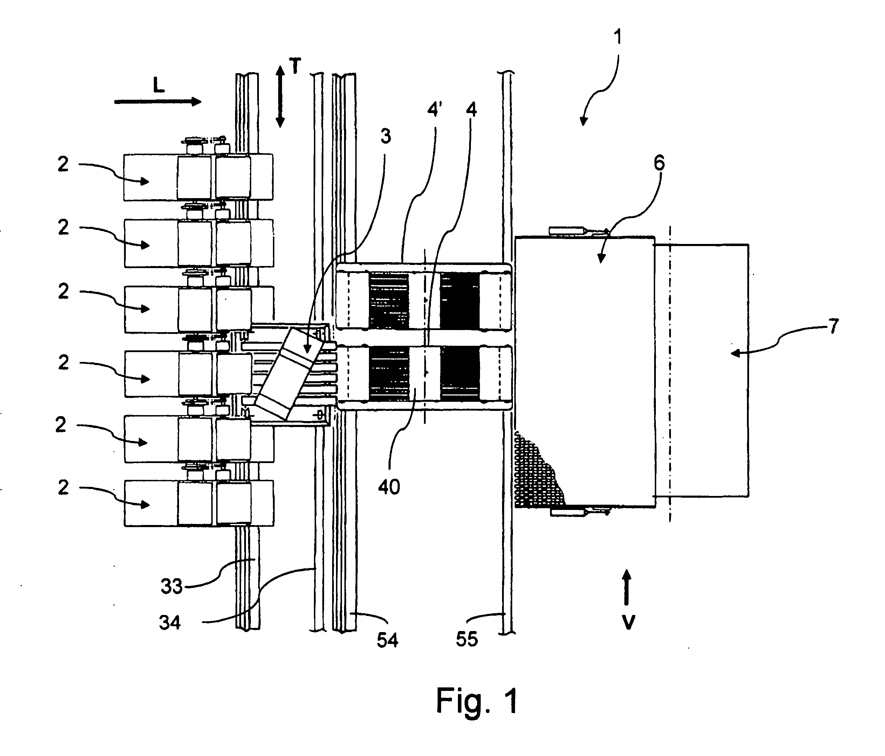

Dans ce qui suit, on désignera par les mêmes références les éléments identiques représentés sur les figures 1 à 11.

L'installation (1) telle que visualisée sur la figure 1 comporte, dans la variante de réalisation choisie, une pluralité de postes d'alimentation (2) adjacents, disposés suivant une direction (T) perpendiculaire à la direction d'alimentation (L). Un dispositif de coupe (3), mobile dans la direction transversale (T), se déplace sur des rails (33 et 34) pour venir se positionner à la demande devant un des postes d'alimentation (2). Un dispositif de stockage et de transfert (4) comportant un cylindre de stockage (40) est déplaçable en translation sur des rails (54 et 55) suivant une direction perpendiculaire à la direction d'alimentation pour pouvoir être amené successivement au droit du dispositif de coupe (3) puis au droit d'un poste de réception (6) placé en amont d'un tambour de confection (7).

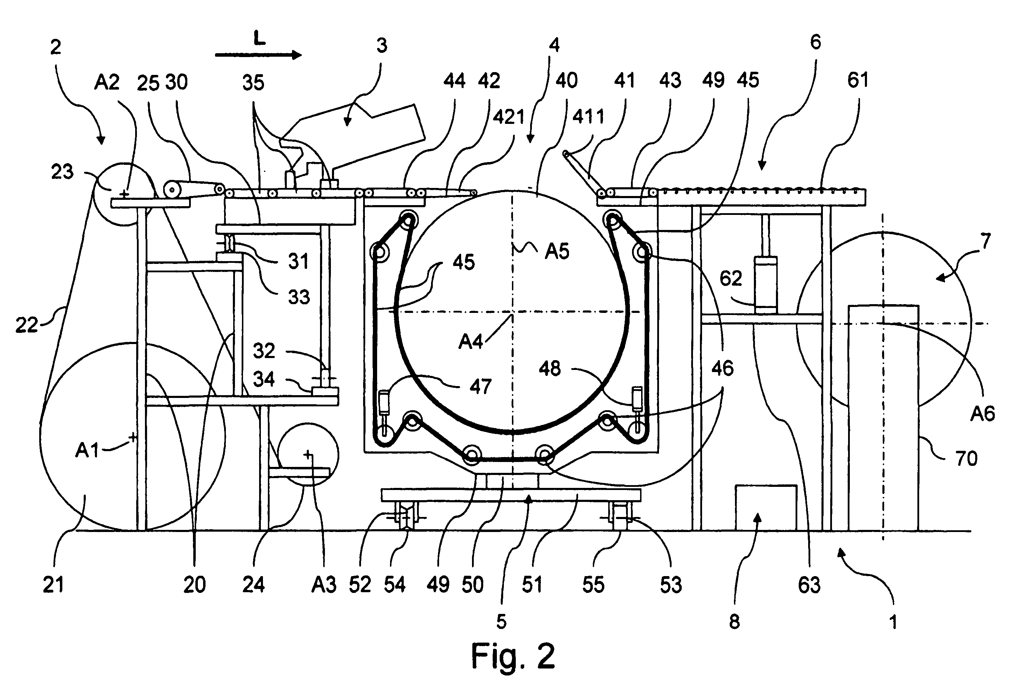

La figure 2 montre en détail la disposition de chacun de ces organes.

Le poste d'alimentation (2) comprend un châssis (20) sur lequel est montée une bobine de stockage (21) d'un produit se présentant sous la forme d'une bande continue supportée par un intercalaire (22) ; la bobine de stockage est entraînée par un moteur (non représenté) autour d'un axe A1 horizontal perpendiculaire à la direction d'alimentation L. L'intercalaire (22) est déroulé autour d'un premier rouleau de séparation (23) monté à rotation sur le châssis (20) autour d'un axe A2 parallèle à A1, et vient s'enrouler autour d'un bobineau de récupération (24) également monté sur le châssis (20), en rotation autour d'un axe A3 parallèle à A1 et A2. Une bande transporteuse (25) montée sur le châssis (20) permet de réceptionner et de guider la bande de produit à la sortie du rouleau de séparation.

L'outil de coupe (3), dans la variante de réalisation proposée, est monté sur un chariot mobile (30) comportant des roues de guidage (31) et des roues motorisées (32), et se déplace dans la direction transversale (T) sur un rail (33) et un chemin de roulement (34) montés sur le châssis (20). Un ensemble de bandes transporteuses (35), solidaires du chariot (30), permet de guider la bande de produit au travers du dispositif de coupe. Un système de mesure (non représenté) permet de déterminer avec précision la longueur de bande déroulée et de commander la coupe afin d'obtenir un tronçon de produit de la longueur désirée. L'outil de coupe est adapté à la nature du produit à couper.

Le dispositif de transfert et de stockage (4) comprend un cylindre de stockage (40) monté à rotation sur un châssis (49), autour d'un axe horizontal A4 perpendiculaire à la direction d'alimentation (L). Ce cylindre est entouré par une bande flexible (45) formant une boucle fermée et circulant sur un ensemble de guides (46) montés sur le châssis (49) selon des axes parallèles à l'axe A4. Cet ensemble de guides peut par exemple être formé par un ensemble de poulies.

La partie du cylindre (40) entourée par la bande flexible située sur la moitié inférieure de ce dernier, représente une ouverture angulaire comprise de préférence entre 180° et 240°. La partie de cylindre complémentaire située dans la partie supérieure du cylindre (40) est laissée libre. En tout état de cause on s'arrangera pour déterminer le diamètre du cylindre (40) et la longueur de la partie de circonférence de ce dernier en contact avec la bande flexible de telle manière que cette longueur soit supérieure à la longueur des tronçons de produit à manutentionner.

Le cylindre (40) est motorisé par un moteur (non représenté) et, lors de sa rotation autour de son axe de révolution A4, il peut entraîner par friction la bande flexible (45), à la manière d'une poulie motrice. Le cylindre et la bande flexible sont aptes à entraîner conjointement par friction un tronçon de bande de produit pris entre eux, pour enrouler ce tronçon autour du cylindre.

Un système de mise en tension (47, 48) assure une tension constante de la bande flexible et permet de maintenir sans les déformer des tronçons de produit d'épaisseurs et de masses variables. Ce système peut être constitué par des vérins pneumatiques agissant sur les axes des poulies choisies à cet effet, et montés coulissants dans des lumières ou encore, par des masses calibrées.

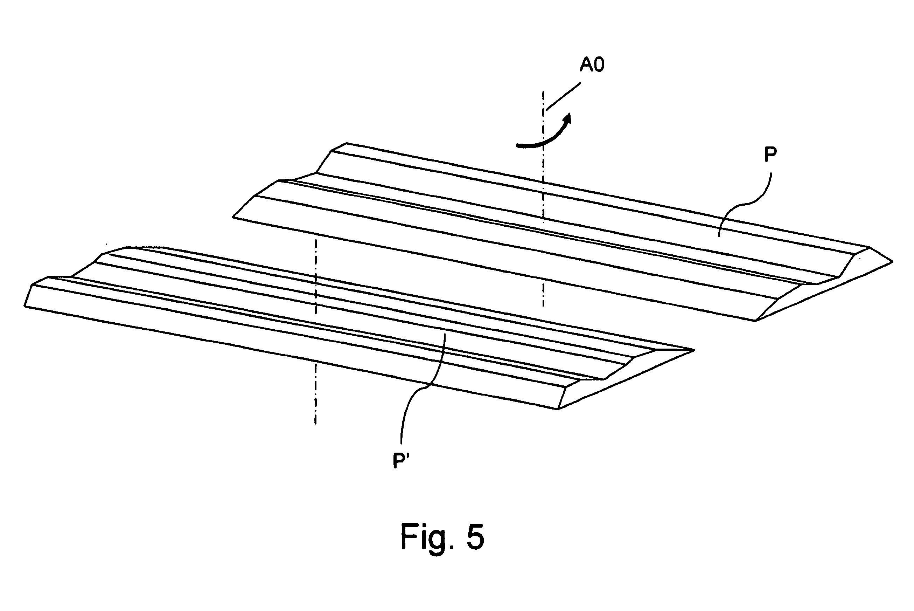

Dans l'exemple de réalisation illustré, le châssis (49) de ce dispositif est monté à rotation sur un support (50), autour d'un deuxième axe (A5) vertical et perpendiculaire à l'axe de révolution (A4) du cylindre de stockage et passant par l'équateur du cylindre de stockage. De cette manière il devient possible, en pivotant de 180° autour de l'axe A5, d'effectuer le retournement du tronçon de bande avant de le déposer sur le tambour de confection. Sur la figure 5 est détaillée la situation d'un tronçon de produit avant retournement (P) et après retournement (P') de 180° autour d'un axe (A0), perpendiculaire au plan du produit et passant par son centre. On obtient le même résultat en opérant une rotation de 180° du châssis (49) autour de l'axe A5, après avoir enroulé le tronçon (P) autour du cylindre de stockage (40) puis en déroulant ce même tronçon sur un poste de réception (6) ou sur un tambour de confection.

Le support (50) est monté sur le châssis (51) d'un chariot mobile (5) se déplaçant dans la direction perpendiculaire à la direction d'alimentation (L). Ce chariot comprend des roues de guidage (52) et des roues motorisées (53) qui se déplacent respectivement sur des rails (54) et sur un chemin de roulement (55). Le chariot permet de positionner le système de transfert et de stockage au droit de l'outil de coupe (3) et de la bobine de stockage (2) dont on désire extraire un tronçon de produit. Après chargement de ce tronçon autour du cylindre de stockage, le déplacement transversal du chariot à une position prédéterminée au droit du poste de réception (6) ou du tambour (7) permet de décharger le tronçon de produit sur le poste de réception ou sur le tambour en le pré positionnant avant sa dépose définitive sur le tambour (7).

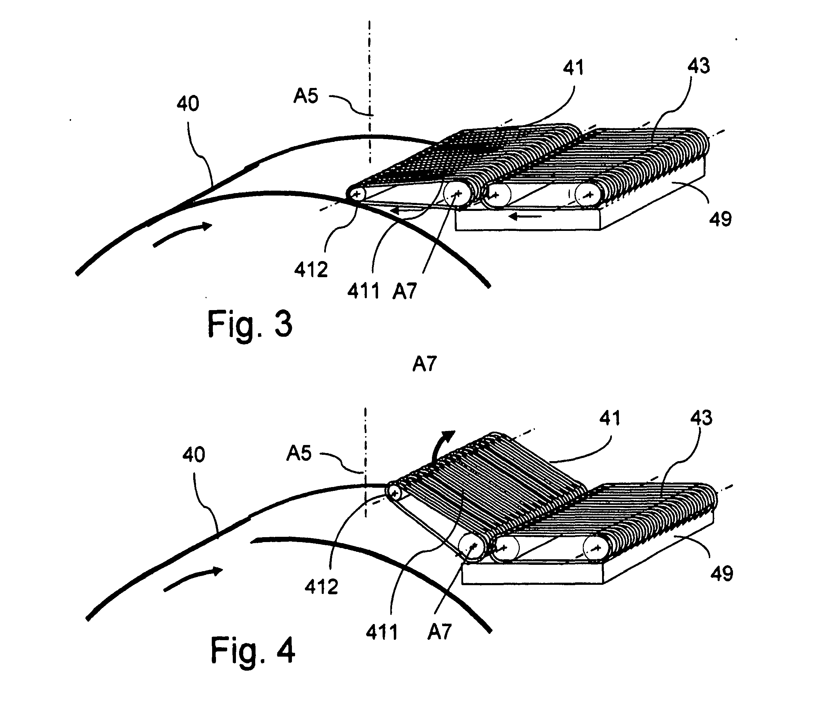

Un système d'aiguillages (41 et 42) permet de faciliter l'enroulage et le déroulage du tronçon de produit autour du cylindre (40). Les figures 3 et 4 illustrent un aiguillage conforme à l'invention. Le bras (41) est monté pivotant autour d'un axe (A7) rendu solidaire du châssis (49) et parallèle à l'axe de rotation du cylindre (A4). Il est muni d'une bande transporteuse sans fin (411) entraînée par un moteur (non représenté) et circulant dans une direction perpendiculaire à l'axe de pivotement (A7). En position fermée, telle que représentée sur la figure 3, l'extrémité du bras (412) est amenée à proximité de la surface du cylindre (40). On entend par proximité, la distance la plus faible possible permettant d'éviter le contact entre l'extrémité du bras (412) et la surface du cylindre de stockage, tout en assurant le transfert d'un tronçon de produit depuis la surface du cylindre de stockage vers la bande transporteuse (411) du bras de stockage (41) sans dégradation du produit. En position ouverte, telle qu'illustrée sur la figure 4, l'extrémité libre (412) du bras se trouve à distance de la surface du cylindre (40). Cette distance doit être suffisante pour permettre à un tronçon de produit déposé sur la surface du cylindre de circuler librement.

Le dispositif de stockage servant de support à la présente description comporte deux bras (41 et 42), disposés en vis à vis, de part et d'autre du cylindre de stockage, équipés chacun d'une bande transporteuse (411 et 421). Cette disposition s'avère particulièrement pratique lorsque l'on envisage de retourner les tronçons de produit, les aiguillages (41 et 42) étant positionnés alternativement en entrée et en sortie du dispositif de stockage et de transfert.

Des bandes transporteuses (43, 44) fixées sur le châssis (49) assurent le transfert du tronçon de produit en entrée ou en sortie du dispositif de transfert et de stockage (4) et circulent dans le même sens que les bandes transporteuses dont sont équipés les bras pivotant (41 et 42) qu'elles jouxtent.

En aval du dispositif de stockage et de transfert (4) est disposé un poste de réception (6) constitué d'une table (61) comportant par exemple un ensemble de rouleaux montés à rotation autour d'axes transversaux ; ces rouleaux peuvent être au choix, libres ou motorisés. La table (61) du poste de réception est montée sur un châssis (63), et peut être relevée à l'aide d'un vérin (62) pour laisser libre le passage balayé par le dispositif de transfert et de stockage (4) lors de sa mise en rotation autour de l'axe A5.

Le tambour (7) sur lequel les tronçons de produit sont enroulés successivement selon des procédures et à des emplacements prédéterminés, est placé en sortie du poste de réception. Le tambour (7) est monté à rotation sur un châssis (70), autour d'un axe horizontal (A6) perpendiculaire à l'axe d'alimentation (L).

L'installation (1) comprend également une unité de pilotage (8) qui commande notamment :
- le déroulement de la bobine de stockage (2) ainsi que son rembobinage ;
- la circulation des bandes transporteuses (25, 35, 44, 421, 411, 43, 61) en ajustant leurs vitesses linéaires respectives ;
- le déplacement transversal de l'outil de coupe (30) et du chariot (5) ;
- la mesure de la longueur de bande ;
- l'actionnement de l'outil de coupe (3) ;
- l'entraînement du cylindre de stockage (40) et l'ajustement de sa vitesse tangentielle ;
- le réglage de la tension de la bande flexible (47,48) ;
- le pivotement des bras du système d'aiguillage (41, 42) ;
- le soulèvement de la table du poste de réception (6) ;
- le retournement du châssis (49) autour de l'axe A5 ;
- la mise en rotation du tambour (7) ;

Il en résulte une automatisation d'un certain nombre d'opérations de manutention des bandes de produit, en particulier leur alimentation depuis les bobines de stockage (2), leur découpe en tronçons de produit, ainsi que le transport et le retournement des tronçons jusqu'à proximité du tambour de confection (7).

Les variantes d'installation sont nombreuses et peuvent conduire à aménager le dispositif de transfert et de stockage (4).

Ainsi une première variante (non représentée) consiste à fixer l'outil de coupe (3) sur le châssis (49) du dispositif de transfert et de stockage, le chariot (5) assurant simultanément le déplacement transversal du châssis (49), de l'outil de coupe et des bandes transporteuses associées (35).

Il est également possible, lorsqu'il s'avère nécessaire de retourner des tronçons de produits présentant une symétrie et que la masse de ces tronçons n'est pas excessive, d'utiliser un cylindre de stockage muni d'un système magnétique, si les produits à manutentionner contiennent des éléments métalliques ou, d'un système pneumatique permettant de maintenir par dépression les tronçons de produit sur la surface du cylindre de transfert.

De même, si le nombre de produits à poser est faible, il peut s'avérer intéressant de maintenir le châssis (49) en position fixe autour de l'axe A5 et d'alimenter par deux bobines différentes des produits présentant, une fois posés, une symétrie par rapport au plan perpendiculaire à l'axe du tambour et passant en son milieu. On pourra alors se contenter, si la nature des produits à manutentionner s'y prête, de n'utiliser que le seul aiguillage (41) situé en sortie du dispositif de transfert et de stockage.

On peut également envisager que le produit se présente sous forme d'une bande déjà découpée en tronçons d'une longueur prédéterminée. Dans ce cas, le poste d'alimentation et les moyens de transfert situés en amont du poste de transfert et de stockage sont adaptés pour amener ces tronçons prédécoupés directement sur le procédé de transfert et de stockage où est opéré le retournement, si nécessaire, puis pour opérer le déchargement du tronçon de produit à une position transversale déterminée sur le poste de réception ou sur le tambour.

Lorsque le nombre de tronçons à poser devient important l'usage d'un deuxième dispositif de manutention et de stockage (4') tel que représenté sur la figure 1, voire plus, peut contribuer à améliorer le rendement de l'installation.

Il est également possible de supprimer le poste de réception. Auquel cas les tronçons de produit sont déposés directement depuis le dispositif de transfert et de stockage (4) sur le tambour (7).

De même, au lieu d'être alignés cotes à cotes, les postes d'alimentation peuvent être répartis sur un carrousel que l'on actionne pour venir placer au droit du (ou des) dispositif(s) de transfert et de stockage le (ou les) poste(s) d'alimentation sélectionné(s).

On peut aussi prévoir de stocker dans le dispositif de transfert (4) plusieurs tronçons de produit disposés parallèlement les uns aux autres. Ces tronçons peuvent provenir d'une même bobine de stockage ou de bobines de stockage différentes. En apportant au dispositif de transfert et de stockage quelques modifications mineures, il est en effet possible d'introduire successivement ces tronçons dans le dispositif de stockage et de les extraire les uns après les autres, vers le poste de réception à des positions transversales différentes. Il suffit pour cela de munir le dispositif de stockage de plusieurs systèmes d'aiguillages, tels que précédemment décrits, disposés côte à côte parallèlement à l'axe de révolution du cylindre de stockage, chaque système d'aiguillage étant actionné indépendamment du système de stockage adjacent, pour permettre le transfert d'un tronçon à la fois, vers ou depuis le dispositif de stockage. La largeur du cylindre de stockage (40) est évidemment ajustée en conséquence.

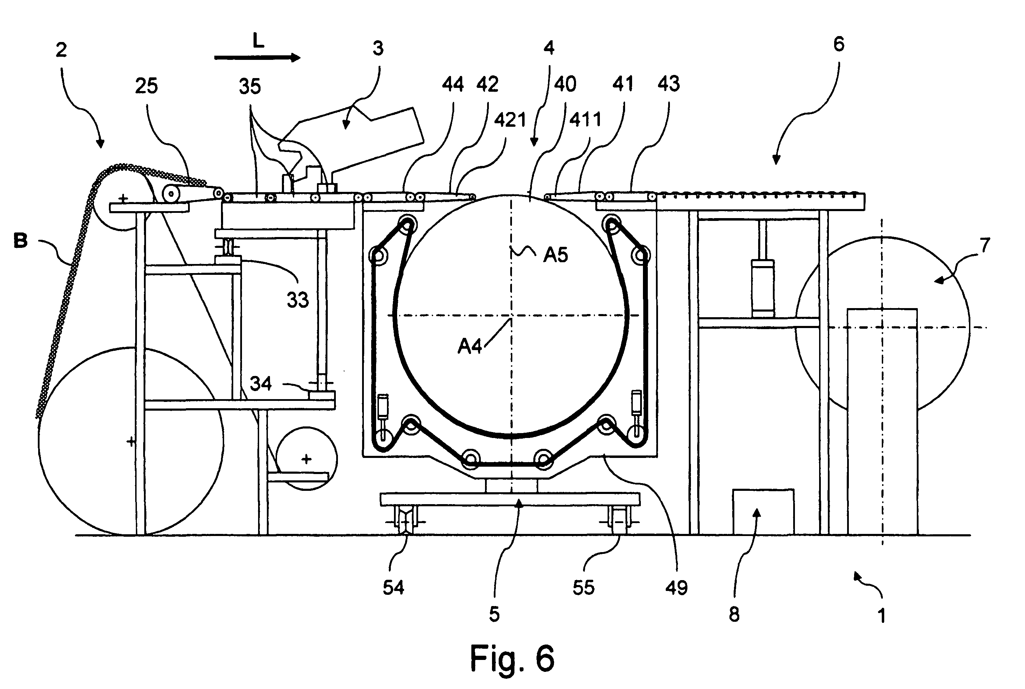

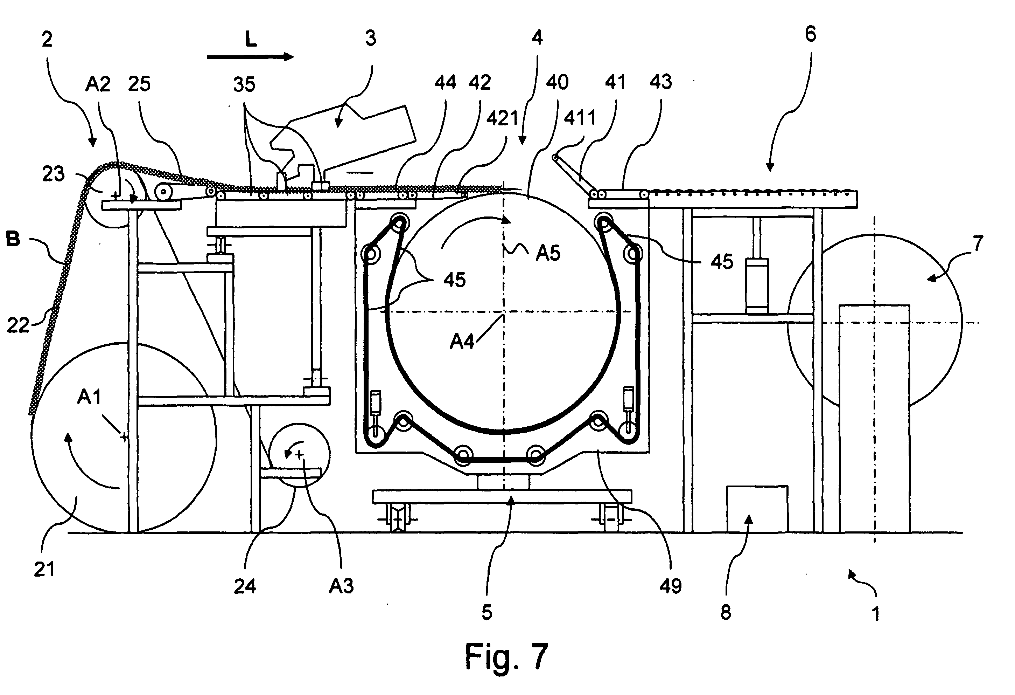

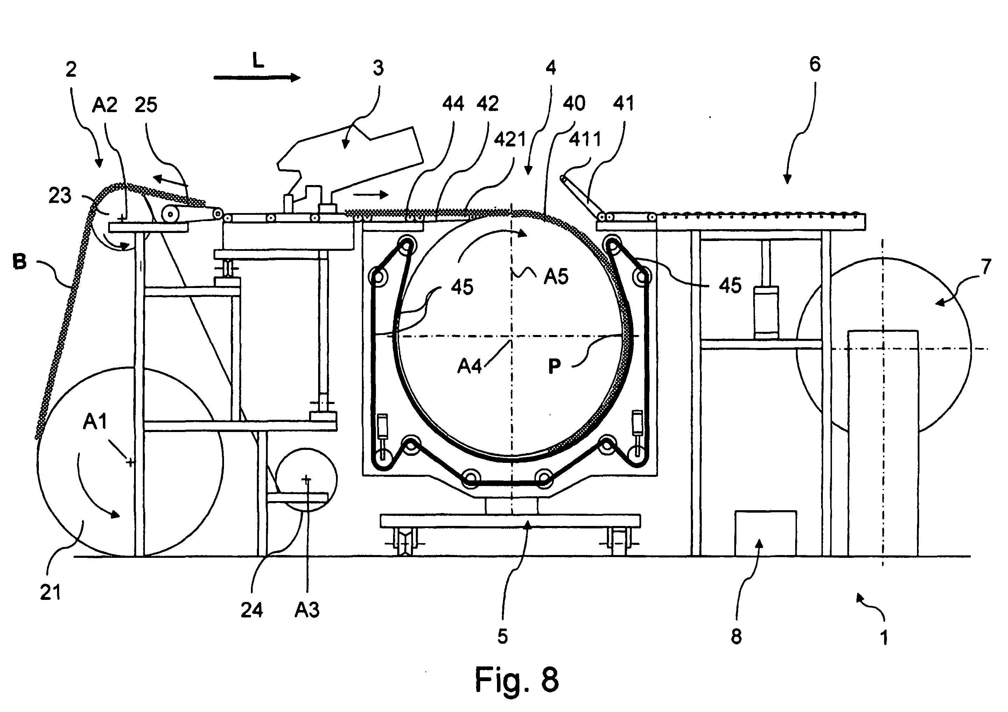

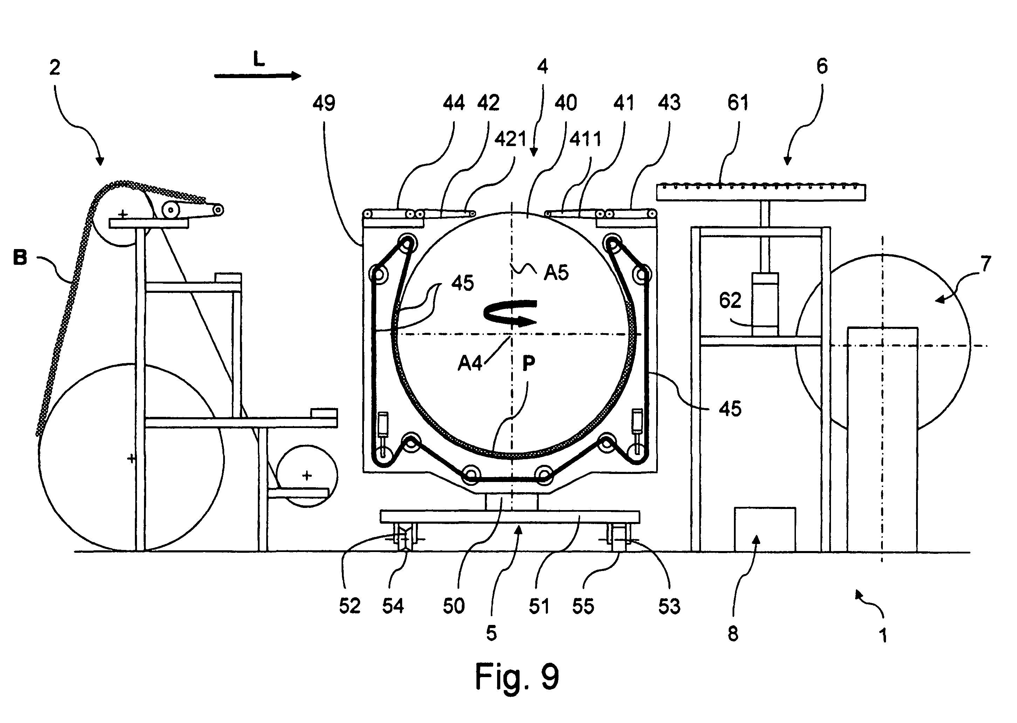

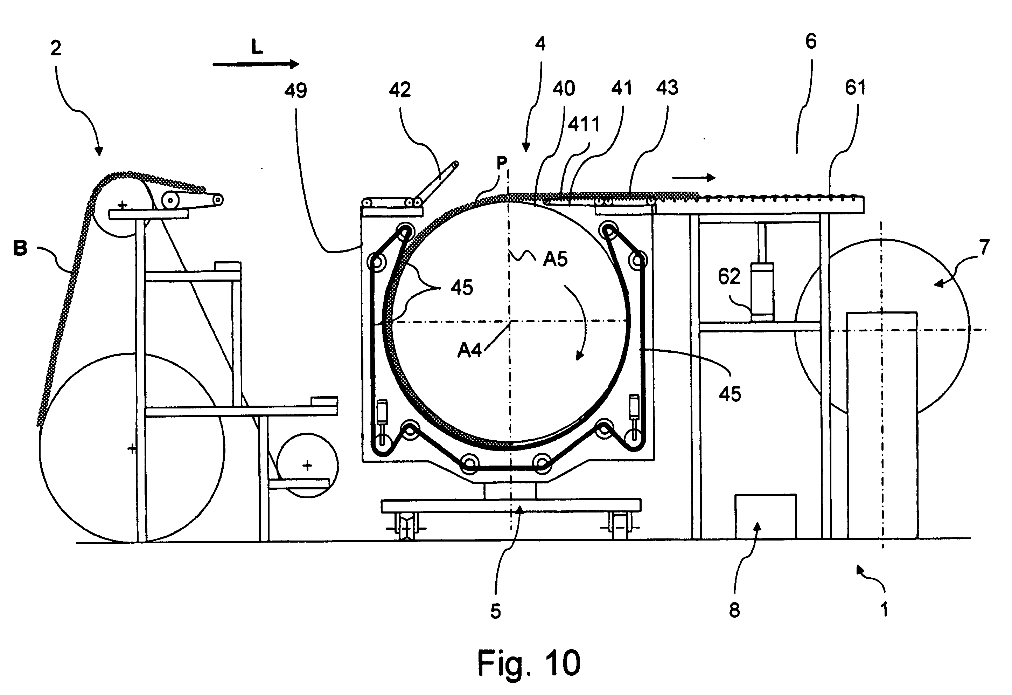

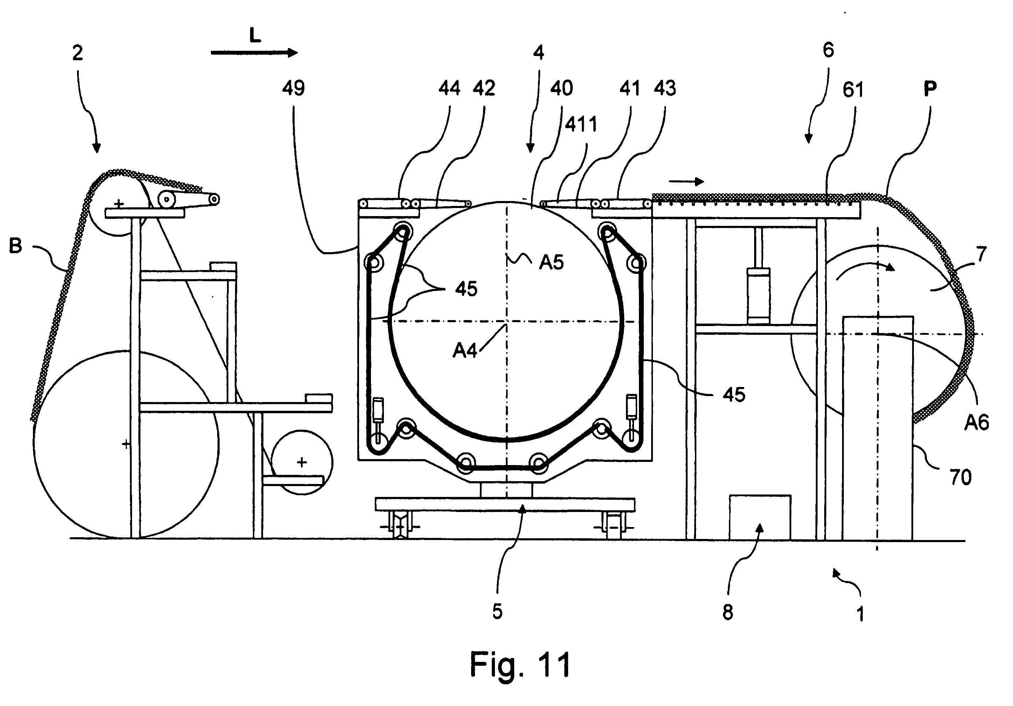

A titre illustratif, le procédé mettant en oeuvre une installation (1) comprenant un tel dispositif de manutention et de stockage (4) comprend les étapes décrites ci après et illustrées sur les figures 6 à 11 :
- En référence à la figure 6, et en fonction de l'état d'avancement de l'assemblage des produits de l'enveloppe de pneumatique en cours de fabrication, on sélectionne le poste d'alimentation (2) susceptible de délivrer la bande de matière B que l'on souhaite poser sur le tambour de confection (7).
- On déplace ensuite l'outil de coupe (3) et le chariot (5) supportant le dispositif de stockage (4) sur leurs voies de circulation respectives (33, 34, 54, 55) pour venir les positionner au droit du poste d'alimentation (2) sélectionné, les bras (42 et 41) sont abaissés.
   Les bandes transporteuses (25, 35, 44 et 421) se trouvent dans le prolongement les unes des autres pour former un unique chemin de convoyage.
- En référence à la figure 7, on relève alors le bras (41), et on transfère dans la direction d'alimentation (L) une certaine longueur de bande B depuis le poste d'alimentation (2) vers le dispositif de stockage (4), en passant à l'aplomb de l'outil de coupe (3). A cet effet, on déroule la bobine de stockage (21), la bande intercalaire (22) s'enroulant alors sur le bobineau de récupération (24), tandis que la bande de produit B circule successivement sur les bandes transporteuses (25, 35, 44 et 421). Le cylindre (40) est entraîné en rotation autour de son axe A4 et il entraîne à son tour par friction la bande flexible (45). La bande de matière B vient s'appliquer contre la surface supérieure du cylindre (40) qu'elle accompagne dans sa rotation en traversant le passage laissé libre entre l'extrémité du bras (41) et la surface du cylindre (40). La bande de produit B vient alors en prise avec la bande flexible (45) qui, en la maintenant plaquée contre le cylindre (40), l'entraîne par friction conjointement au cylindre de stockage (40) pour assurer son enroulement autour de celui-ci.
- En référence à la figure 8, lorsque la longueur déroulée correspond à la longueur désirée, on actionne l'outil de coupe (3) pour former un tronçon (P), que l'on continue à enrouler autour du cylindre de stockage (40) jusqu'à emprisonner complètement le tronçon de produit (P) entre la bande flexible (45) et le cylindre (40). Afin de ne pas gêner le mouvement transversal de l'outil de coupe, il est procédé à un bref rembobinage de la bande de matière B sur sa bobine de stockage, jusqu'à ce que l'extrémité libre de la bande B repose sur la bande transporteuse (25).
- En référence à la figure 9, l'outil de coupe (3) est déplacé transversalement et va se positionner au droit d'un autre poste d'alimentation. Le bras (41) est abaissé et le système de stockage et de transfert (4) peut alors être amené au droit du poste de réception (6), par mise en mouvement du chariot (5) sur ses rails (54 et 55). On choisira judicieusement la position transversale de manière à pré positionner le tronçon de produit (P).
- Au cas où cela s'avérerait nécessaire on fait pivoter de 180° le châssis (49) autour de l'axe A5, de manière à retourner le tronçon de produit. Afin de libérer une place suffisante pour permettre ce retournement, la table (61) du poste de réception (6) peut être surélevée momentanément à l'aide du vérin (62). On veillera également à ce que le châssis (49) ne se trouve pas au droit du poste de coupe (3) pendant cette opération.
- En référence à la figure 10, le bras (42) est relevé, et la table (61) du poste de réception (6) est réalignée avec le convoyeur (43) du poste de stockage et de transfert. Le cylindre (40) est mis en rotation et le tronçon (P) est extrait du dispositif de transfert et de stockage en circulant sur les bandes transporteuses (411, 43), puis transféré sur la table (61) du poste de réception (6).
- En référence à la figure 11, le tronçon (P) est finalement déposé sur le tambour de confection (7) préalablement mis en rotation.
- Le bras (42) est abaissé, et l'installation est alors prête pour assurer le transfert d'un nouveau tronçon de produit.

## Revendications

1. Dispositif de stockage et de transfert (4) de tronçons de bande de produits caoutchouteux (P) destinés à la fabrication d'une enveloppe de pneumatique, comprenant un cylindre de stockage (40) monté à rotation possible autour d'un axe de révolution horizontal (A4) sur un châssis (49), **caractérisé en ce que** le châssis (49) est monté sur un support (50) à rotation possible autour d'un axe (A5) vertical et perpendiculaire à l'axe de révolution (A4) du cylindre de stockage (40).

2. Dispositif de stockage et de transfert selon la revendication 1, **caractérisé en ce qu'**il comporte une bande flexible (45) formant une boucle fermée, circulant autour d'une partie du cylindre (40) et d'un ensemble de guides (46), le cylindre (40) et la bande flexible (45) étant aptes à enserrer et à entraîner par friction le tronçon de bande (P) pris entre le cylindre (40) et la bande flexible (45) afin d'enrouler ledit tronçon (P) autour du cylindre (40).

3. Dispositif de stockage et de transfert selon la revendication 2, **caractérisé en ce que** le support (50) est monté sur un chariot mobile (5).

4. Dispositif de stockage et de transfert selon la revendication 3, **caractérisé en ce que** le chariot mobile (5) est guidé par un rail (54) permettant d'amener le dispositif de stockage et de transfert (4), de manière sélective, au droit d'un ensemble de postes d'alimentation (2) adjacents, puis de se positionner au droit d'un poste de réception (6) ou d'un tambour (7).

5. Dispositif de stockage et de transfert selon l'une quelconque des revendications 3 ou 4, **caractérisé en ce que** le chariot mobile comporte un outil de coupe (3), placé en amont du cylindre de stockage (40).

6. Dispositif de stockage et de transfert selon l'une quelconque des revendications 1 à 5 **caractérisé en ce qu'**il est équipé d'un système d'aiguillage (41, 42) apte à guider le tronçon de bande (P) lorsque ledit tronçon (P) est introduit dans le cylindre de stockage (40) ou extrait dudit cylindre.

7. Dispositif de stockage et de transfert selon la revendication 6, **caractérisé en ce que** le système d'aiguillage comprend au moins un bras (41, 42) mobile, monté pivotant sur le châssis (49), autour d'un axe (A7) parallèle à l'axe de révolution (A4) du cylindre de stockage (40), entre une position fermée dans laquelle une extrémité libre du bras (412) est amenée à proximité de la surface du cylindre de stockage (40), et une position ouverte dans laquelle l'extrémité libre se trouve à distance de la surface du cylindre de stockage (40).

8. Dispositif de stockage et de transfert selon la revendication 7 **caractérisé en ce que** ledit bras est muni d'une bande transporteuse sans fin (411) circulant dans une direction perpendiculaire à l'axe de pivotement (A7) du bras.

9. Dispositif de stockage et de transfert selon la revendication 6, **caractérisé en ce que** le système d'aiguillage comporte deux bras mobiles (41, 42) disposés en vis à vis de part et d'autre du cylindre de stockage (40).

10. Dispositif de stockage et de transfert selon la revendication 2, **caractérisé en ce que** la bande flexible (45) est maintenue à une tension constante par un système de mise en tension (47, 48).

11. Dispositif de stockage et de transfert selon la revendication 2 **caractérisé en ce que** le cylindre de stockage (40) est motorisé en étant apte à entraîner par friction la bande flexible (45).

12. Procédé de fabrication de pneumatiques comprenant un dispositif de stockage et de transfert de tronçons de produit caoutchouteux (P) **caractérisé en ce qu'**il comprend les étapes suivantes :
- enrouler depuis un poste d'alimentation (2) un tronçon (P) d'une longueur prédéterminée autour d'un cylindre de stockage (40), le dit cylindre (40) étant monté à rotation autour d'un axe de révolution horizontal (A4) sur un châssis (49), ledit châssis étant lui-même monté sur un support (50) à rotation possible autour d'un axe (A5) vertical et perpendiculaire à l'axe de révolution (A4) du cylindre de stockage (40),
- faire pivoter de 180° le châssis (49) sur lequel est monté le cylindre de stockage (40), autour de l'axe de rotation (A5) dudit châssis (49),
- placer le dispositif de stockage (4) au droit d'un poste de réception (6) ou d'un tambour de pose (7),
- transférer ledit tronçon (P) depuis le dispositif de stockage (4) vers le poste de réception (6) ou le tambour de pose (7) en le déroulant depuis le cylindre de stockage (40).

## Patentansprüche

1. Speicher- und Übertragungsvorrichtung (4) für Bandabschnitte von Kautschukprodukten (P), die zur Herstellung eines Luftreifenmantels bestimmt sind, mit einem Speicherzylinder (40), der um eine waagrechte Drehachse (A4) drehbar auf einen Rahmen (49) montiert ist, **dadurch gekennzeichnet, dass** der Rahmen (49) um eine senkrechte Achse (A5) drehbar auf einen Träger (50) montiert ist, die lotrecht zur Drehachse (A4) des Speicherzylinders (40) liegt.

2. Speicher- und Übertragungsvorrichtung nach Anspruch 1, **dadurch gekennzeichnet, dass** sie ein elastisches Band (45) aufweist, das eine geschlossene Schleife bildet, die um einen Teil des Zylinders (40) und über einen Satz von Führungen (46) umläuft, wobei der Zylinder (40) und das elastische Band (45) in der Lage sind, den zwischen dem Zylinder (40) und dem elastischen Band (45) gehaltenen Bandabschnitt (P) zu umklammern und durch Reibung mitzunehmen, um den Abschnitt (P) um den Zylinder (40) zu wickeln.

3. Speicher- und Übertragungsvorrichtung nach Anspruch 2, **dadurch gekennzeichnet, dass** der Träger (50) auf einen beweglichen Wagen (5) montiert ist.

4. Speicher- und Übertragungsvorrichtung nach Anspruch 3, **dadurch gekennzeichnet, dass** der bewegliche Wagen (5) von einer Schiene (54) geführt wird, die es ermöglicht, die Speicher-und Übertragungsvorrichtung (4) selektiv vor einen Satz von benachbarten Zufuhrstationen (2) zu bringen und sich dann vor einer Empfangsstation (6) oder einer Trommel (7) zu positionieren.

5. Speicher- und Übertragungsvorrichtung nach einem der Ansprüche 3 oder 4, **dadurch gekennzeichnet, dass** der bewegliche Wagen ein Schneidewerkzeug (3) aufweist, das stromaufwärts vor dem Speicherzylinder (40) angeordnet ist.

6. Speicher- und Übertragungsvorrichtung nach einem der Ansprüche 1 bis 5, **dadurch gekennzeichnet, dass** es mit einem Umstellsystem (41, 42) versehen ist, das den Bandabschnitt (P) führen kann, wenn dieser Abschnitt (P) in den Speicherzylinder (40) eingeführt oder aus dem Zylinder entnommen wird.

7. Speicher- und Übertragungsvorrichtung nach Anspruch 6, **dadurch gekennzeichnet, dass** das Umstellsystem mindestens einen beweglichen Arm (41, 42) aufweist, der auf dem Wagen (49) um eine Achse (A7), die parallel zur Drehachse (A4) des Speicherzylinders (40) liegt, zwischen einer geschlossenen Stellung, in der ein freies Ende des Arms (412) in die Nähe der Oberfläche des Speicherzylinders (40) gebracht wird, und einer offenen Stellung, in der das freie Ende sich in Abstand zur Oberfläche des Speicherzylinders (40) befindet, schwenkbar montiert ist.

8. Speicher- und Übertragungsvorrichtung nach Anspruch 7, **dadurch gekennzeichnet, dass** der Arm mit einem endlosen Transportband (411) versehen ist, das in einer Richtung lotrecht zur Schwenkachse (A7) des Arms umläuft.

9. Speicher- und Übertragungsvorrichtung nach Anspruch 6, **dadurch gekennzeichnet, dass** das Umstellsystem zwei bewegliche Arme (41, 42) aufweist, die zu beiden Seiten des Speicherzylinders (40) einander gegenüber angeordnet sind.

10. Speicher- und Übertragungsvorrichtung nach Anspruch 2, **dadurch gekennzeichnet, dass** das elastische Band (45) durch ein Spannsystem (47, 48) auf einer konstanten Spannung gehalten wird.

11. Speicher- und Übertragungsvorrichtung nach Anspruch 2, **dadurch gekennzeichnet, dass** der Speicherzylinder (40) motorisiert und in der Lage ist, das elastische Band (45) durch Reibung mitzunehmen.

12. Verfahren zur Herstellung von Luftreifen, das eine Speicher- und Übertragungsvorrichtung für Bandabschnitte von Kautschukprodukten (P) aufweist, **dadurch gekennzeichnet, dass** es die folgenden Schritte aufweist:
- ausgehend von einer Zufuhrstation (2), Aufwickeln eines Abschnitts (P) einer vorbestimmten Länge um einen Speicherzylinder (40), wobei der Zylinder (40) um eine waagrechte Drehachse (A4) drehbar auf einen Rahmen (49) montiert ist, wobei der Rahmen selbst um eine senkrechte Achse (A5) lotrecht zur Drehachse (A4) des Speicherzylinders (40) drehbar auf einen Träger (50) montiert ist,
- Schwenken des Rahmens (49), auf den der Speicherzylinder (40) montiert ist, um 180° um die Drehachse (A5) des Rahmens (49),
- Anordnen der Speichervorrichtung (4) vor einer Empfangsstation (6) oder vor einer Verlegetrommel (7),
- Übertragen des Abschnitts (P) von der Speichervorrichtung (4) zur Empfangsstation (6) oder zur Verlegetrommel (7), indem er vom Speicherzylinder (40) abgewickelt wird.

## Claims

1. A device (4) for storing and transferring strip sections of rubber products (P) intended for making a tyre cover, comprising a storage cylinder (40) mounted for possible rotation about a horizontal axis of revolution (A4) on a frame (49), **characterised in that** the frame (49) is mounted on a support (50) for possible rotation about an axis (A5) which is vertical and perpendicular to the axis of revolution (A4) of the storage cylinder (40).

2. A storage and transfer device according to Claim 1, **characterised in that** it has a flexible strip (45), forming a closed loop and circulating around part of the cylinder (40), and a set of guides (46), with the cylinder (40) and the flexible strip (45) being suitable for clamping and driving by friction the strip section (P) held between the cylinder (40) and the flexible strip (45), in order to wind the said section (P) around the cylinder (40).

3. A storage and transfer device according to Claim 2, **characterised in that** the support (50) is mounted on a movable carriage (5).

4. A storage and transfer device according to Claim 3, **characterised in that** the movable carriage (5) is guided by a rail (54) allowing the storage and transfer device (4) to be brought selectively opposite a set of adjacent supply stations (2), and then to be positioned opposite a receiving station (6) or a drum (7).

5. A storage and transfer device according to either of Claims 3 or 4, **characterised in that** the movable carriage has a cutting tool (3) placed upstream of the storage cylinder (40).

6. A storage and transfer device according to any one of Claims 1 to 5, **characterised in that** it is equipped with a switching device system (41, 42) suitable for guiding the strip section (P) when the said section (P) is introduced into the storage cylinder (40) or drawn off from the said cylinder.

7. A storage and transfer device according to Claim 6, **characterised in that** the switching device system comprises at least one movable arm (41, 42) mounted to pivot on the frame (49) about an axis (A7) parallel to the axis of revolution (A4) of the storage cylinder (40) between a closed position, in which a free end of the arm (412) is brought close to the surface of the storage cylinder (40), and an open position, in which the free end is at a distance from the surface of the storage cylinder (40).

8. A storage and transfer device according to Claim 7, **characterised in that** the said arm is equipped with an endless conveyor belt (411) circulating in a direction perpendicular to the axis of pivoting (A7) of the arm.

9. A storage and transfer device according to Claim 6, **characterised in that** the switching device system has two movable arms (41, 42) arranged opposite one another on either side of the storage cylinder (40).

10. A storage and transfer device according to Claim 2, **characterised in that** the flexible strip (45) is held at constant tension by a tensioning system (47, 48).

11. A storage and transfer device according to Claim 2, **characterised in that** the storage cylinder (40) is motorised, being suitable for driving by friction the flexible strip (45).

12. A process for making tyres, comprising a device for storing and transferring rubber product sections (P), **characterised in that** it comprises the following steps:
- winding a section (P) of predetermined length, withdrawn from a supply station (2), around a storage cylinder (40), the said cylinder (40) being mounted to rotate about a horizontal axis of revolution (A4) on a frame (49), the said frame in turn being mounted on a support (50) for possible rotation about an axis (A5) which is vertical and perpendicular to the axis of revolution (A4) of the storage cylinder (40),
- pivoting by 180° the frame (49) on which the storage cylinder (40) is mounted, about the axis of rotation (A5) of the said frame (49),
- placing the storage device (4) opposite a receiving station (6) or a laying drum (7), and
- transferring the said section (P) from the storage device (4) to the receiving station (6) or the laying drum (7) by unwinding it from the storage cylinder (40).
